# EUROPÄISCHE PATENTSCHRIFT

(11) **EP 1 162 043 B1**
(45) Veröffentlichungstag und Bekanntmachung des Hinweises auf die Patenterteilung: **05.01.2005**
(21) Anmeldenummer: 01109889.4
(22) Anmeldetag: 24.04.2001
(51) Int. Cl.: B26D 1/24

(54) **Verfahren sowie Vorrichtung zum Längsschneiden einer Warenbahn**
Method and device for the slitting of a web
Méthode ainsi que dispositif pour la coupe longitudinale d'une nappe

(30) Priorität: 29.04.2000 DE 10021121
(43) Veröffentlichungstag der Anmeldung: 12.12.2001
(73) Patentinhaber: Hydro Aluminium Deutschland GmbH, 51149 Köln (DE)
(72) Erfinder: Haiplick, Volker, 41517 Grevenbroich (DE); Kern, Stefan, Dipl.-Ing., 41516 Grevenbroich (DE); Denkmann, Volker, Dipl.-Ing., 47906 Kempen (DE)
(74) Vertreter: COHAUSZ & FLORACK

(56) Entgegenhaltungen:
- EP-A- 0 444 008
- DE-A- 4 236 347
- US-A- 3 056 324
- US-A- 3 238 853
- US-A- 3 359 842
- US-A- 3 828 633
- KLEIN H: "ROLLENSCHNEID- UND WICKELMASCHINE FUR HOCHSTLEISTUNG WIRTSCHAFTLICHES MASCHINENKONZEPT MIT MODERNSTEN KOMPONENTEN. (TEIL 2)" COATING, VERLAG COATING THOMAS & CO, CH, Bd. 28, Nr. 4, 1. April 1995 (1995-04-01), Seiten 127-132, XP000510817 ISSN: 0590-8450

## Beschreibung

Die Erfindung betrifft gemäß ihrer ersten Lehre ein Schmalschnittschneidverfahren zum Längsschneiden von Folien und Bändern, die zumindest in einer Lage aus einem Aluminiumwerkstoff bestehen, in Streifen, bei welchen durch Verwendung des Federschneidverfahrens auf einer Seite des Schnitts eine Verformung der geschnittenen Streifen erzeugt wird und durch die Schnittführung Streifen mit Verformungen an beiden Kanten und Streifen ohne Verformungen an beiden Kanten erzeugt wereden, wobei alle Streifen aufgewickelt werden, um Abfallstreifen zu vermeiden. Weiter betrifft die Erfindung gemäß einer zweiten Lehre eine Rollenschere mit einer Federmesserkassette zum Längsschneiden von Folien und Bändern, die zumindest in einer Lage aus einem Aluminiumwerkstoff bestehen, in Streifen, mit einer Untermesserwelle und mindestens zwei in die Untermesserwelle eintauchenden, federbelasteten Obermessern, wobei die Untermesserwelle mindestens zwei Untermesser aufweist und die Ober- und Untermesser paarweise angeordnet und entgegengesetzt ausgerichtet sind, so dass Streifen mit Verformungen an beiden Kanten und Streifen ohne Verformungen an beiden Kanten erzeugt werden, zur Verwirklichung des Schmalschnittschneidverfahrens gemäß der ersten Lehre der Erfindung.

Schmalschnittscheidverfahren werden insbesondere zum Schneiden von Aluminiumfolien und -bändern, aber auch zum Schneiden von Verbundwerkstoffen aus Aluminium und Papier sowie aus Aluminium und Kunststoff in einem Dickenbereich von etwa 0,007 bis 0,7 mm eingesetzt. Unter Aluminium bzw. Aluminiumwerkstoffen werden dabei Legierungen verstanden, die etwa mindestens 90 % Aluminium enthalten. Die zu schneidenden Bänder können sowohl blank als auch lackiert sein. Die zu schneidenden Verbundwerkstoffe werden beispielsweise durch Kaschieren oder Extrudieren hergestellt.

Zur Herstellung von Aluminiumfolien und -bändern werden in einer ersten Stufe Barren in Breiten zwischen etwa 900 und 2200 mm gegossen und zunächst warm und abschließend kalt auf Enddicke gewalzt. Je nach Einsatzzweck in der anschließenden Verarbeitung stellt die Aluminium-Halbzeugindustrie die Aluminiumfolien und -bänder in unterschiedlichen Enddicken und -breiten her. Dabei wird die Enddicke durch die Stichabnahmen im Walzprozess bestimmt. Die Endbreite wird durch Längsteilen der Bänder oder Folien auf sogenannten Rollenscheren eingestellt.

Eine Rollenschere besteht grundsätzlich aus drei Baugruppen,
1. einem Abwickler, auf dem das sogenannte Mutterband abgewickelt wird,
2. einer Schneidpartie, in der das Band durch Messer der Länge nach in schmalere Streifen geteilt wird und
3. die Aufwicklung, in der die zuvor geschnittenen Streifen zu Rollen aufgewickelt werden.

Für die Qualität der geschnittenen Rollen sind - neben den für den Rollenschneider nicht beeinflussbaren Größen - folgende Dinge maßgebend:
- Einhaltung der Breitentoleranz,
- saubere Schnittkanten,
- Einhaltung der Toleranz in Bezug auf Geradheit nach Ablaufen und auf Welligkeit,
- kantengerade und stramme Wicklung,
- richtige Dimensionierung des Wickelkerns (Hülse) und des Außendurchmessers sowie
- fehlerfreie Oberfläche.

Für die ersten vier der genannten Punkte ist der Aufbau der Schneidpartie von erheblicher Bedeutung. Zum Schneiden von Aluminiumwerkstoffen werden unterschiedliche Techniken eingesetzt. Beim Rollschermesserverfahren werden die Bänder zwischen Rollen mit Scherkanten teilweise abgeschert, wobei die Trennung der Streifen abschließend über einen Restbruch stattfindet. Die Rollen greifen beim Rollschermesserverfahren mit fest vorgegebenen Abständen ineinander ein. Beim Klingenschnittverfahren wird die Folie über ein feststehendes, in ein Untermesser eintauchendes Obermesser geschnitten.

Die vorliegende Erfindung bezieht sich auf das Federmesserverfahren. Hierbei wird das Band oder die Folie über eine Untermesserwelle mit einer gewissen Umschlingung geführt. Ein in die Untermesserwelle eintauchendes kreisförmiges Obermesser schneidet das Aluminium in einem Punkt in der Art eines Scherenschnitts. Das Obermesser wird herkömmlicherweise durch eine Feder an das Untermesser angedrückt. Neuere Verfahren nutzen hierzu statt einer Feder Pneumatikzylinder. Durch das Eintauchen des Obermessers wird der Aluminiumstreifen am Messerrücken leicht deformiert. Diese Deformation beruht darauf, daß im Schnittpunkt die relativ geringe Dehngrenze von Aluminium überschritten wird und das Eintauchen des Obermessers im Randbereich des Streifens eine bleibende Verformung hinterläßt.

Durch diese Verformung beim Schneiden baut sich beim Aufwickeln eine Kantenerhöhung in der Rolle durch übereinandergeschichtete Verformungen auf. Diese Kantenerhöhung führt dazu, daß die Rolle einseitig stärker im Durchmesser wächst. Dieses Aufbauen führt wiederum zum einen dazu, daß die Geradheit nach dem Ablaufen und die (Rand-) Welligkeit negativ beeinflußt wird, und zum anderen dazu, daß die kantengerade und stramme Wicklung gefährdet wird. Durch das zu starke Aufbauen einer Seite entsteht in den oberen Lagen eine Querkraft, die dazu führt, daß die Lagen aus der Richtung verlaufen und die Rolle nicht mehr kantengerade gewickelt werden kann. Eine zu starke Deformation der Kante wirft nach dem Abrollen eine Welligkeit auf und längt - besonders bei schmalen Streifen - eine Seite des Streifens so stark, daß der Streifen die zulässige Abweichung von einer ideellen, geraden Bahn überschreitet. Man spricht in einem solchen Fall von einer unzulässigen Säbeligkeit des Streifens.

Zur Vermeidung dieses Effektes ist es bekannt, im Aufwickelpunkt eine tangentiale Kraft auf die Rolle mittels einer Kontaktwalze einzuleiten. Diese Kontaktwalze reduziert in einem gewissen Maß den durch das Schneiden verursachten Aufbau der Rolle. Durch das Aufwickeln von zumeist mehreren Rollen auf einer Wickelwelle und das Glätten mit nur einer Kontaktwalze über alle Rollen hinweg liegt die Kontaktwalze an jeder Rolle nur auf der aufbauenden Kante auf.

Aus der DE-OS 2 233 433 ist ein Verfahren und eine Vorrichtung zum Längsschneiden von Materialbahnen aus Aluminium bekannt, bei dem die vorbeschriebene Problematik dadurch vermieden wird, daß zwischen den Streifen ein schmaler Abfallstreifen herausgetrennt wird, in den die Verformungen beim Schneiden gelegt werden. Hierbei ist zum einen problematisch, daß die doppelte Anzahl von Ober- und Untermessern zur Trennung von zwei Streifen eingesetzt werden muß und zum anderen ein Abfallstreifen entsteht.

Zur Vermeidung von Verformungen an den geschnittenen Streifen ist aus der veröffentlichten Europäischen Patentanmeldung EP 0 444 008 Al eine Kreismesserschere zum Längsschneiden von dünnen oder mehrlagigen Materialbahnen bekannt, welche zwischen auf einer Oberwelle angeordneten, gegebenenfalls mit Distanzringen beabstandeten Kreismesserpaaren einen größeren Außendurchmesser als die Kreismesserpaare aufweisende, elastische Mitnehmerscheiben aufweist. Nachteilig ist jedoch die mangelnde Flexibilität der bekannten Kreismesserschere hinsichtlich der wählbaren Schnittbreiten der zu schneidenden Streifen, da bei einer Änderung der Schnittbreite der Streifen die Obermesserwelle ausgebaut und umgerüstet werden muss, so dass lange Rüstzeiten benötigt werden. Ein derartige Rüstzeiten verhinderndes Federschneidverfahren ist in der oben genannten Europäischen Patentanmeldung nicht offenbart.

Ausgehend von dem beschriebenen, bekannten Stand der Technik liegt der Erfindung die Aufgabe zugrunde, ein Schmalschnittschneidverfahren unter Verwendung des Federschneidverfährens und eine Rollenschere mit einer Federmesserkassette zum Längsschneiden von Folien und Bändern, die zumindest in einer Lage aus einem Aluminiumwerkstoff bestehen, in Streifen zur Verfügung zu stellen, um die Einhaltung der Toleranz in Bezug auf Geradheit nach Ablaufen und auf Welligkeit sowie eine kantengerade und stramme Wicklung zu gewährleisten.

Gemäß der ersten Lehre der Erfindung wird die zuvor hergeleitet und aufgezeigte Aufgabe dadurch gelöst, daß die Streifen mit Verformungen an beiden Kanten und die Streifen ohne Verformungen an beiden Kanten jeweils aufgewickelt werden, so dass Abfallstreifen vermieden werden. Dadurch, daß an beiden Kanten der Streifen gleiche Verhältnisse vorliegen, wird ein Kantenaufbau beim Aufwickeln einer Rolle vermieden, wodurch gleichzeitig sichergestellt ist, daß die Geradheit nach dem Ablaufen und die Welligkeit eingehalten wird. Rollen aus Bändern, die an beiden Kanten keine Verformungen aufweisen, lassen sich selbstverständlich ohne weiteres einwandfrei aufwickeln.

Eine vorteilhafte Ausgestaltung erfährt das Schmallschnittverfahren gemäß der ersten Lehre der Erfindung dadurch, daß die an beiden Kanten eine Verformung aufweisenden Streifen mit Hilfe einer Kontaktwalze geglättet werden. Beim Aufwickeln der Streifen, die an beiden Kanten eine Verformung aufweisen, wird durch den beidseitigen Aufbau der Rollen die Wicklung in sich stabilisiert. Die so geschnittenen Rollen führen durch ihre leicht U-förmige Profilierung die nächste aufzuwickelnde Lage in eine stabile Position, die nicht von Querkräften zu einem Verlaufen der Rollen führen kann.

Dadurch, daß die Streifen mit und ohne Verformungen an Kanten auf getrennten Wicklern aufgewickelt werden, kann an diesen Wicklern dem Zustand der Streifen gesondert Rechnung getragen werden. So sollte die Kontaktwalze an dem die Streifen mit Verformungen an den Kanten aufwickelnden Wickler in der Regel eine höhere tangentiale Kraft in die Rolle einleiten, als die Kontaktwalze an dem Wickler für die Streifen ohne Verformungen an den Kanten.

Gemäß einer zweiten Lehre der Erfindung ist die oben hergeleitet und aufgezeigte Aufgabe für eine Rollenschere mit einer Federmesserkassette, zur Verwirklichung eines Schmalschnittschneideverfahrens gemäß der ersten Lehre der Erfindung, dadurch gelöst, daß Wickler zum Aufwickeln der Streifen mit Verformungen und der Streifen ohne Verformungen an beiden Kanten vorhanden sind. Durch diese entgegengesetzte Ausrichtung der Ober- und Untermesser gegenüber einem Streifen ist gewährleistet, daß die Schnittführung in einem Streifen entweder an beiden Kanten oder an keiner Kante eine Verformung erzeugt. Mit einer derart ausgestalteten Federmesserkassette werden also Streifen erzeugt, die abwechselnd eine Verformung an beiden Kanten oder keine Verformung an beiden Kanten aufweisen. Dies ist mit den oben bereits beschriebenen Vorteilen bei der Aufwicklung der entstehenden Streifen verbunden.

Die Obermesser können gemäß alternativer Ausgestaltungen der Erfindung über eine oder zwei Obermesserwellen angestellt sein. Der Vorteil einer einzigen Obermesserwelle besteht darin, daß alle Schnittpunkte auf einer Linie parallel zur Längsachse der Obermesserwelle liegen. Der Vorteil von zwei Obermesserwellen liegt darin, daß die Anstellkräfte besser eingestellt werden können.

Eine weitere Alternative zu den bereits beschriebenen Möglichkeiten der Anstellung der Obermesser besteht darin, daß die Obermesser über Einzelobermesserhalter angestellt sind. Auch hierdurch läßt sich gewährleisten, daß alle Schnittpunkte auf einer Linie im idealen Schnittpunkt liegen. Darüber hinaus wird gewährleistet, daß der für einen einwandfreien Längsschnitt erforderliche Scherwinkel eingehalten werden kann.

Es gibt eine Vielzahl von Möglichkeiten, das Schmalschnittschneidverfahren gemäß der ersten Lehre der Erfindung als auch die Federmesserkassette gemäß der zweiten Lehre der Erfindung vorteilhaft auszugestalten und weiterzubilden. Hierzu wird beispielsweise verwiesen einerseits auf die den Patentansprüchen 1 und 4 nachgeordneten Patentansprüche, andererseits auf die Beschreibung von bevorzugten Ausführungsbeispielen in der Zeichnung. In der Zeichnung zeigt:
- Fig. 1:: im Schnitt ein erstes Ausführungsbeispiel einer erfindungsgemäßen Federmesserkassette zum Längsschneiden von Folien und Bändern in Streifen und
- Fig. 2a)-c): schematisch die Anordnung der Obermesser und Untermesser züeinander.

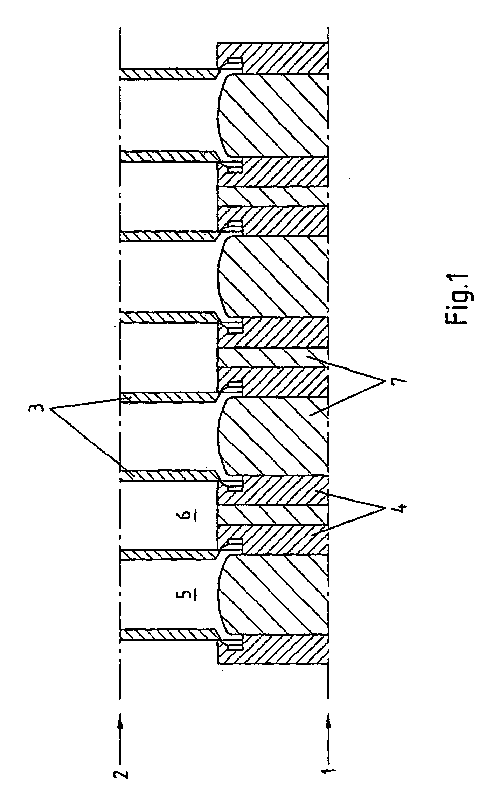

Das in Fig. 1 im Schnitt dargestellte erste Ausführungsbeispiel einer erfindungsgemäßen Federmesserkassette zum Längsschneiden von Folien und Bändern, die zumindest in einer Lage aus einem Aluminiumwerkstoff bestehen, in Streifen, weist eine Untermesserwelle 1, eine Obermesserwelle 2 und insgesamt acht in die Untermesserwelle 1 eintauchende, federbelastete Obermesser 3 auf. Die Untermesserwelle trägt bei dem dargestellten Ausführungsbeispiel ebenfalls acht Untermesser 4. Erfindungsgemäß sind die einen Streifen schneidenden Obermesser 3 und Untermesser 4 jeweils gegeneinander gestellt, d.h., ihre Schneidrücken sind einander zugewandt oder voneinander abgewandt.

Die in Fig. 1 dargestellte erfindungsgemäß ausgestaltete Federmesserkassette schneidet im Bereich 5 einen Streifen mit Verformungen an beiden Kanten, während im Bereich 6 ein Streifen, ohne Verformungen an beiden Kanten erzeugt wird.

Zur Herstellung eines definierten Abstandes zwischen den Untermessern 5 sind auf der Untermesserwelle 1 Paßstücke 7 angeordnet.

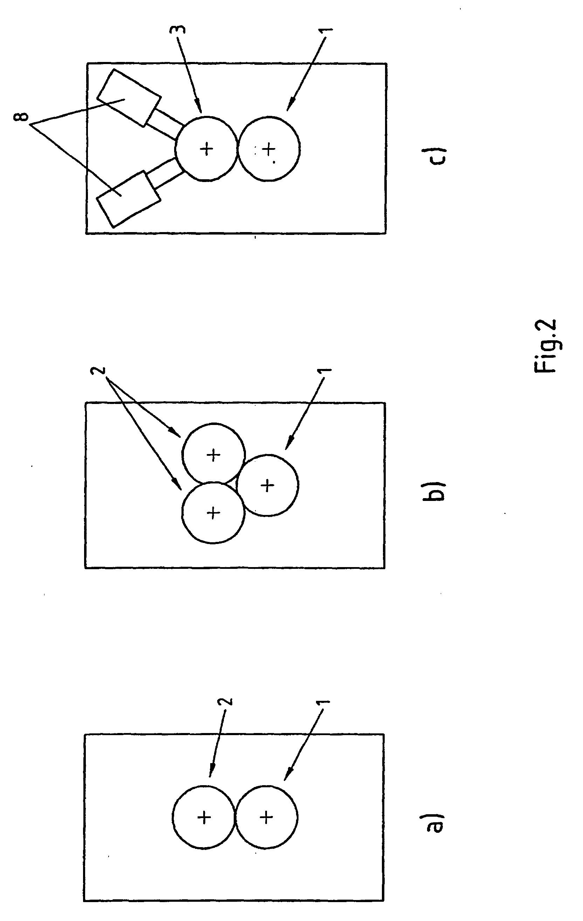

In Fig. 2 ist schematisch dargestellt, daß der Aufbau einer erfindungsgemäßen Schneidpartie entweder durch eine herkömmliche Unter-/Obermesserwellenpaarung erfolgen kann (Fig. 2a) oder durch das Anstellen zweier Obermesserwellen 2 an eine Untermesserwelle 1 (Fig. 2b) oder durch Einzelobermesserhalter 8, mit Hilfe derer ein Obermesser gegenüber der Untermesserwelle 1 angestellt ist (Fig. 2c).

## Patentansprüche

1. Schmallschnittschneidverfahren zum Längsschneiden von Folien und Bändern, die zumindest in einer Lage aus einem Aluminiumwerkstoff bestehen, in Streifen, bei welchem durch Verwendung des Federschneidverfahrens auf einer Seite des Schnitts eine Verformung der geschnittenen Streifen erzeugt wird und durch die Schnittführung Streifen mit Verformungen an beiden Kanten und Streifen ohne Verformungen an beiden Kanten erzeugt werden,
**dadurch gekennzeichnet, daß** die Streifen mit Verformungen an beiden Kanten und die Streifen ohne Verformungen an beiden Kanten jeweils aufgewickelt werden, so dass Abfallstreifen vermieden werden.

2. Schmalschnittschneidverfahren nach Anspruch 1,
**dadurch gekennzeichnet, daß** die an beiden Kanten eine Verformung aufweisenden Streifen mit Hilfe einer Kontaktwalze geglättet werden.

3. Schmalschnittschneidverfahren nach Anspruch 1 oder 2,
**dadurch gekennzeichnet, daß** die Streifen mit und ohne Verformungen an den Kanten auf getrennten Wicklern aufgewickelt werden.

4. Rollenschere mit einer Federmesserkassette zum Längsschneiden von Folien und Bändern, die zumindest in einer Lage aus einem Aluminiumwerkstoff bestehen, in Streifen, mit einer Untermesserwelle (1) und mindestens zwei in die Untermesserwelle (1) eintauchenden, federbelasteten Obermessern (3), wobei die Untermesserwelle (1) mindestens zwei Untermesser (4) aufweist und die Ober- und Untermesser paarweise angeordnet und entgegengesetzt ausgerichtet sind, so dass Streifen mit Verformungen an beiden Kanten und Streifen ohne Verformungen an beiden Kanten erzeugt werden, zur Verwirklichung eines Verfahrens nach einem der Ansprüche 1 bis 3,
**dadurch gekennzeichnet, daß** Wickler zum Aufwickeln der Streifen mit Verformungen an beiden Kanten und der Streifen ohne Verformungen an beiden Kanten vorhanden sind..

5. Rollenschere nach Anspruch 4,
**dadurch gekennzeichnet, daß** die Obermesser (3) über eine oder zwei Obermesserwellen (2) angestellt sind.

6. Rollenschere nach Anspruch 4,
**dadurch gekennzeichnet, daß** die Obermesser (3) über Einzelobermesserhalter (8) angestellt sind.

## Claims

1. A narrow-cut cutting method for the slitting of foils and sheets, which at least in one ply are made of an aluminium material, into strips, wherein a deformation of the cut strips is produced on one side of the cut by using the spring-cutting method and strips with deformations at both edges and strips without deformation at both edges are produced by the cutting control,
**characterised in that**
the strips with deformations at both edges and the strips without deformations at both edges are respectively wound up, so that waste strips are avoided.

2. The narrow-cut cutting method according to claim 1, **characterised in that** the strips having a deformation at both edges are smoothed with the aid of a contact roll.

3. The narrow-cut cutting method according to claim 1 or 2, **characterised in that** the strips with and without deformations at the edges are wound onto separate winding machines.

4. Rotary shears with a penknife cartridge for the slitting of foils and sheets, which at least in one ply are made of an aluminium material, into strips, with a lower-blade shaft (1) and at least two springloaded upper blades (3) dipping into the lower-blade shaft (1), whereby the lower-blade shaft (1) has at least two lower blades (4) and the upper and lower blades are arranged in pairs and orientated opposite one another, so that strips with deformations at both edges and strips without deformations at both edges are produced, for the implementation of a method according to any one of claims 1 to 3,
**characterised in that** winding machines are present for winding up the strips with deformations at both edges and the strips without deformations at both edges.

5. The rotary shears according to claim 4, **characterised in that** the upper blade (3) is adjusted by means of one or two upper-blade shafts (2).

6. The rotary shears according to claim 4, **characterised in that** the upper blade (3) is adjusted by means of individual upper-blade holders (8).

## Revendications

1. Procédé de refendage à coupe étroite destiné à refendre, longitudinalement en bandes, des feuilles ou bandes, qui comportent au moins une couche en matériau d'aluminium, dans lequel l'utilisation du procédé de coupe avec cisaille à ressorts engendre sur un côté de la coupe une déformation des bandes coupées, et le guidage de la coupe génère des bandes avec déformations sur les deux bords et des bandes sans déformation sur les deux bords, **caractérisé en ce que** les bandes avec déformations sur les deux bords et les bandes sans déformation sur les deux bords sont respectivement embobinées de telle sorte que des bandes de rebut sont évitées.

2. Procédé de refendage à coupe étroite selon la revendication 1, **caractérisé en ce que** les bandes ayant une déformation sur les deux bords sont lissées au moyen d'un rouleau de contact.

3. Procédé de refendage à coupe étroite selon la revendication 1 ou 2, **caractérisé en ce que** les bandes avec et sans déformation sur les bords sont enroulées sur des bobines séparées.

4. Cisaille à lames rotatives avec une cassette à lames sur ressorts, destinée à refendre, longitudinalement en bandes, des feuilles ou bandes, qui comportent au moins une couche en matériau d'aluminium, comprenant un arbre à lames inférieures (1) et au moins deux lames supérieures (3), sollicitées par ressort, s'engageant dans l'arbre à lames inférieures (1), l'arbre à lames inférieures (1) présentant au moins deux lames inférieures (4) et les lames supérieures et inférieures sont agencées par paires et sont orientées dans le sens opposé de manière à produire des bandes avec déformations sur les deux bords et des bandes sans déformation sur les deux bords, destinée à la mise en oeuvre d'un procédé selon l'une quelconque des revendications 1 à 3, **caractérisée en ce qu'**il est prévu des bobines pour l'enroulement des bandes avec déformations sur les deux bords et des bobines pour l'enroulement des bandes sans déformation sur les deux bords.

5. Cisaille à lames rotatives selon la revendication 4, **caractérisée en ce que** les lames supérieures (3) sont retenues au moyen d'un ou de deux arbres à lames supérieures (2).

6. Cisaille à lames rotatives selon la revendication 4, **caractérisée en ce que** les lames supérieures (3) sont retenues au moyen d'un support pour lame supérieure individuelle (8).
